# EUROPEAN PATENT APPLICATION

(11) **EP 3 757 498 A1**
(43) Date of publication of application: **30.12.2020**
(21) Application number: 19461547.2
(22) Date of filing: 26.06.2019
(51) Int. Cl.: F28D 1/053, F28F 9/02, F25B 39/02, B60H 1/00, F25B 39/00, F28D 21/00

(54) **HEAT EXCHANGER**

(71) Applicant: Valeo Autosystemy SP. Z.O.O., 32-050 Skawina (PL)
(72) Inventor: BELZOWSKI, Michal, 32 050 SKAWINA (PL); POKRYWINSKI, Karol, 32 050 SKAWINA (PL); SZOSTEK, Dawid, 32 050 SKAWINA (PL); SEKTI, Condro, 74321 Bietigheim-Bissingen (DE); BENOUALI, Jugurtha, 78322 LE MESNIL SAINT-DENIS CEDEX (FR)
(74) Representative: Bialkowski, Adam

(57) **Abstract**

A heat exchanger comprising a first manifold and a second manifold connected by a bundle of tubes, configured to provide at least an entry pass and an exit pass for a heat exchange fluid, further comprising an inlet port associated with the entry pass and an outlet port associated with the exit pass, wherein the exit pass is fluidically connected with the outlet port through a first opening, the first opening being connected with the outlet port through an additional channel outside of the manifolds, characterized in that the exit pass is further fluidically connected with the outlet port through a second opening so that the path for the heat exchange fluid to the outlet port is shorter from the second opening than from the first opening.

## Description

### FIELD OF THE INVENTION

The invention relates to the field of heat exchangers, for example heat exchangers suitable for operating with a reversible air conditioning circuit intended in particular to heat or to cool the passenger compartment of a vehicle.

### BACKGROUND OF THE INVENTION

The automotive industry faces ever increasing demand for efficiency of the components in order to meet various requirements. The efficiency of the air conditioning loop has an impact on overall vehicle's range.

Some vehicles use two-function refrigerant loop, able to perform both heating and cooling functions. Such loops may use heat exchangers called evapo-condensers (i.e. evaporator condensers). Compared to standard systems, providing the loop with heat pump mode has several advantages, mainly connected with a possibility of heating the cabin of the vehicle, instead of utilization of an electric heater core and consequential increase of the range of an electric.

One challenge is to increase the heat exchanger performance while it is working in heat pump mode. The size of the core is usually limited by the packaging and cost restrains. Increasing the dimensions of the heat exchanger may negatively affect the mass of the vehicle. In case of heat exchangers with two manifolds connected by heat exchange tubes, a so-called "dead zones" can occur, wherein the flow of the heat exchange fluid is constrained. This concerns especially two-pass heat exchangers, where, in the heat pump mode, the exit pass is greater than the entry pass, and the outlet is usually located in the lower half of the exit pass. Oftentimes, such placement of the outlet is undesired, as the preferable position of the outlet block may be situated someplace else, for various reasons. One of the solutions to this problem is provision of external channels, i.e. so called jumperlines, which allow to place the outlet block at a place remote from the outlet opening in the manifold.

It would be desirable to increase performance of the evapo-condenser heat exchanger with such external channel, without detrimentally affecting the dimensions and mass of its core.

### SUMMARY OF THE INVENTION

The object of the invention is, among others, a heat exchanger comprising a first manifold and a second manifold connected by a bundle of tubes, configured to provide at least an entry pass and an exit pass for a heat exchange fluid, further comprising an inlet port associated with the entry pass and an outlet port associated with the exit pass, wherein the exit pass is fluidically connected with the outlet port through a first opening, the first opening being connected with the outlet port through an additional channel outside of the manifolds, characterized in that the exit pass is further fluidically connected with the outlet port through a second opening so that the path for the heat exchange fluid to the outlet port is shorter from the second opening than from the first opening.

Preferably, the outlet port is attached directly to one of the manifolds.

Preferably, the second opening is located at the level of the outlet port.

Preferably, the second opening is connected fluidically with the additional channel.

Preferably, the entry pass constitutes less than half of entire heat exchange volume defined by passes.

Preferably, the entry pass constitutes substantially one third of entire heat exchange volume defined by passes.

Preferably, there is an intermediate pass between the entry pass and the exit pass.

Preferably, the outlet port is located on a different manifold than the inlet port.

Preferably, the second opening forms a single channel.

Preferably, the second opening forms more than one channel on the side of the exit pass, transforming into single channel on the outlet port side.

### BRIEF DESCRITPTION OF DRAWINGS

Examples of the invention will be apparent from and described in detail with reference to the accompanying drawings, in which:
Fig. 1 shows the subject of an invention in the first embodiment.
Fig. 2 shows the subject of an invention in the second embodiment.
Fig. 3a shows a cross-section of additional channel comprising single channel.
Fig. 3b shows a cross-section of additional channel comprising multiple channels.

### DETAILED DESCRIPTION OF EMBODIMENTS

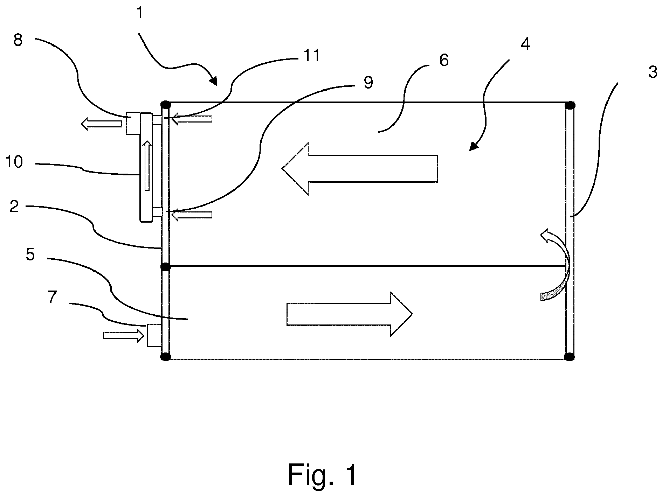

Fig. 1 shows the subject of an invention in the first embodiment. A heat exchanger 1 is configured to be installed in a motor vehicle. The heat exchanger 1 comprises a first manifold 2 and a second manifold 3. The manifolds 2, 3 are connected by a bundle of tubes 4. The tubes 4 may be made of metal sheets which are folded to create channels for a heat exchange fluid. The application of extruded tubes is also envisaged. The manifolds 2,3 and the bundle of tubes 4 are configured so as to provide at least an entry pass 5 and an exit pass 6 for a heat exchange fluid. By the term 'pass' it is meant a plurality of tubes grouped next to each other and configured to convey the heat exchange fluid in substantially the same direction.

Further, the heat exchanger 1 comprises the inlet port 7 associated with the entry pass 5 and an outlet port 8 associated with the exit pass 6. The inlet port 7 and the outlet port 8 are adapted to fluidly connect the heat exchanger 1 with the rest of the components of the heat exchange fluid circulation loop. The inlet ports 7, 8 can be commonly known connection blocks, which are adapted for connecting piping or further components in the loop in a standardized manner.

The inlet pass 5 is fluidically connected with the inlet port 7. The exit pass 6 is fluidically connected with the outlet port 8 through a first opening 9. In particular, the first opening 9 is connected with the outlet port 8 through an additional channel 10 outside of the manifold 2. The placement of the first opening 9 in the lower half of the exit pass 6 is preferable due to achieved performance. The utilization of the additional channel 10, also known as a jumperline, allows to situate the outlet port 8 at any desired location on the manifold, without being restricted to the location of the first opening 9.

To further improve performance of the heat exchanger, the exit pass 6 is fluidically connected with the outlet port 8 through a second opening 11, so that the path for the heat exchange fluid to the outlet port 8 is shorter from the second opening 11 than from the first opening 10. In other words, the second opening 11 is located closer to the outlet port 8 that the first opening 9. This allows to limit or prevent creation of so called dead-zones in the exit pass and provide a more uniform flow through the tubes 4 constituting this exit pass 6. A more uniform flow results in an improved efficiency of heat exchange in a heat pump mode.

In a preferred embodiment of an invention, the second opening 11 is of smaller dimensions than the first opening 10. In other embodiments of an invention, the dimensions of the second opening 11 can be equal to the dimensions of the first opening 10. The term "dimensions" should be considered as the hydraulic diameter of each of the openings 10, 11.

In the shown example, the second opening 11 is located at the level of the outlet port 8, while the first opening 9 is located below it, it the lower half of the exit pass.

Preferably, the entry pass 5 constitutes less than half of entire heat exchange volume, defined by the bundle of tubes 4.

Preferably, the entry pass 5 area constitutes substantially one third of entire heat exchange volume defined by the bundle of tubes 4.

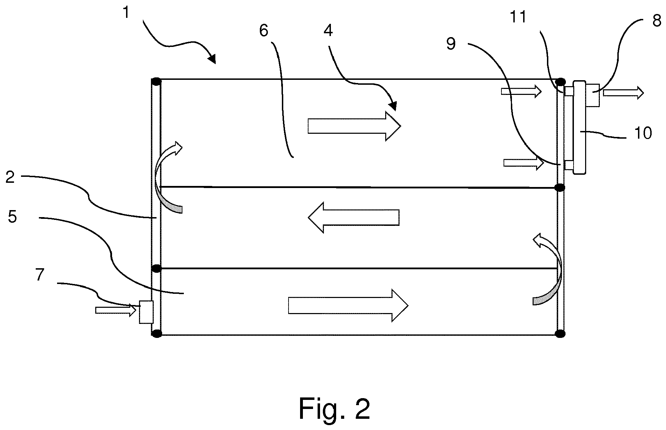

Fig. 2 shows a second embodiment of the invention. In this example, the number of passes is increased to three. This may be necessary in a situation when the outlet port 8 needs to be deployed on the opposite side with respect to the inlet port 7. In the shown example, there is an intermediate pass between the entry pass 5 and the exit pass 6. In such scenario the heat exchange areas of the entry pass 5 and the exit pass 6 are decreased at the expense of the intermediate pass. Nevertheless, if the first opening 9 is located in the lower half of the exit pass 6, then the provision of the second opening 11 according to the invention will promote a more uniform flow of the heat exchange fluid in this pass. This will result in improved efficiency.

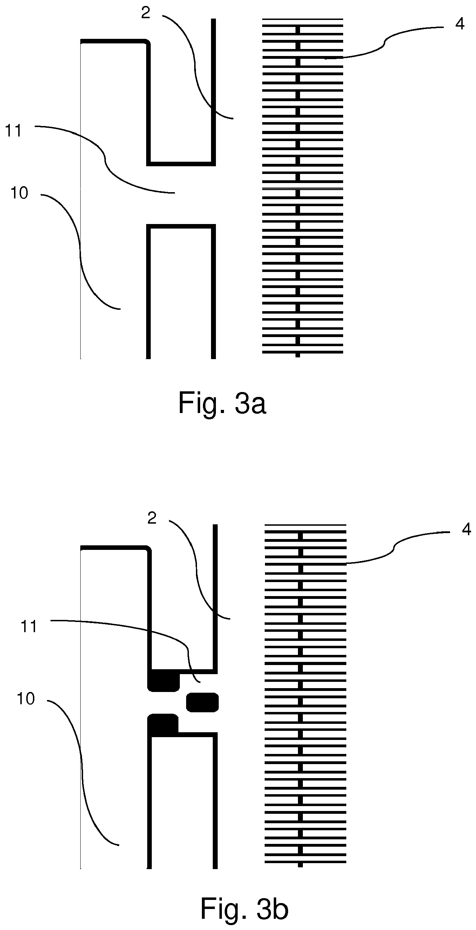

Fig. 3a shows a cross-section of additional channel 10 and the second manifold. The second opening 11 forms a single channel.

Fig. 3b shows a cross-section of additional channel 10 and the second manifold, wherein the second opening 11 forms a plurality of channel converging into a single channel. The configuration may be depend on the number and shape of orifices, however the channel on the side of the exit pass 6 transforms before the additional channel 10 into a single channel on the outlet port 8 side. This may allow to improved control of the flow through the second opening 11.

The benefits of the invention as discussed will be also observed if the outlet port 8 is located closer to the center of the heat exchanger, that is at a level of the manifold opening which is closer to the other pass as seen for example in Fig. 1 or 2. In such case, the upper opening will be referred to as the first opening and the lower opening will be referred to as the second opening.

It should mentioned that the invention provides analogous benefits when the flow through the inlet/outlets, manifolds and tubes is reversed, i.e. it works in cooling mode. The outlet then becomes an inlet, and the inlet becomes an outlet.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A heat exchanger (1) comprising a first manifold (2) and a second manifold (3) connected by a bundle of tubes (4), configured to provide at least an entry pass (5) and an exit pass (6) for a heat exchange fluid, further comprising an inlet port (7) associated with the entry pass (5) and an outlet port (8) associated with the exit pass (6), wherein the exit pass (6) is fluidically connected with the outlet port (8) through a first opening (9), the first opening (9) being connected with the outlet port (8) through an additional channel (10) outside of the manifolds (2, 3), **characterized in that** the exit pass (6) is further fluidically connected with the outlet port (8) through a second opening (11) so that the path for the heat exchange fluid to the outlet port (8) is shorter from the second opening (11) than from the first opening (9).

2. A heat exchanger (1) according to claim 1, wherein the outlet port (8) is attached directly to one of the manifolds (2, 3).

3. A heat exchanger (1) according to any preceding claim, wherein the second opening (11) is located at the level of the outlet port (8).

4. A heat exchanger (1) according to any preceding claim, wherein the second opening (11) is connected fluidically with the additional channel (10).

5. A heat exchanger according to any preceding claim, wherein the entry pass (5) constitutes less than half of entire heat exchange volume defined by passes.

6. A heat exchanger (1) according to any preceding claim, wherein the entry pass (5) constitutes substantially one third of entire heat exchange volume defined by passes.

7. A heat exchanger (1) according to any preceding claim, wherein there is an intermediate pass between the entry pass (5) and the exit pass (6).

8. A heat exchanger (1) according to claim 7, wherein the outlet port (8) is located on a different manifold (2, 3) than the inlet port (7).

9. A heat exchanger according to any preceding claim, wherein the second opening (11) forms a single channel.

10. A heat exchanger according to claim 1, wherein the second opening (11) forms more than one channel on the side of the exit pass (6), transforming into single channel on the outlet port (8) side.
